# EUROPÄISCHE PATENTSCHRIFT

(11) **EP 0 279 065 B1**
(45) Veröffentlichungstag und Bekanntmachung des Hinweises auf die Patenterteilung: **07.04.1993**
(21) Anmeldenummer: 87118986.6
(22) Anmeldetag: 21.12.1987
(51) Int. Cl.: A21B 3/04, A21C 13/00, F24C 15/00, A47J 27/16, A47J 39/00

(54) **Vorrichtung zur Steuerung der Dampfleistung eines mit Dampf betriebenen Gargerätes**
Device for controlling the steam in a steam-proofing apparatus
Dispositif de commande de vapeur dans un appareil de fermentation à vapeur

(30) Priorität: 06.02.1987 DE 3703539
(43) Veröffentlichungstag der Anmeldung: 24.08.1988
(73) Patentinhaber: Electrolux-Juno Küchentechnik GmbH, 35721 Herborn (DE)
(72) Erfinder: Merz, Heinrich, D-6348 Herborn-Seelbach (DE); Beecht, Günter, D-6339 Bischoffen (DE); Dietrich, Wilfried, D-6349 Siegbach-Eisemroth (DE)
(74) Vertreter: Grosse, Wolfgang, Dipl.-Ing.

(56) Entgegenhaltungen:
- EP-A- 0 154 595
- EP-A- 0 203 407
- DE-A- 3 027 566
- DE-U- 8 701 431
- FR-A- 1 260 193

## Beschreibung

Die Erfindung betrifft eine Vorrichtung zur Steuerung der Dampfleistung eines mit Dampf betriebenen Gargerätes, insbesondere eines mit einem beheizten Sattdampferzeuger versehenen Backofens.

Es ist bekannt (DE-OS 34 43 477) ein Gargerät neben dem Betrieb mit umgewälzter Heißluft auch mit Wasserdampf zu betreiben, indem über einen beheizten Dampferzeuger Wasserdampf dem Garraum zugeführt wird.

Aus der DE-U-8701431 ist die Anordnung eines Hilfsgebläses außerhalb eines Garraumes mit einem dazugehörigen Hilfsgebläsegehäuse bekannt, welches über eine Auslaßöffnung mit dem Garraum verbunden ist. Durch diesen vom Hilfsgebläse erzeugte Luftstrom wird überschüssiger Dampf aus dem Garraum abgeführt, mit Frischluft vermischt und dann nach außen geführt. Eine Regelung der Dampfleistung ist dieser Druckschrift nicht zu entnehmen.

Ein schwieriges Problem besteht darin, die Dampfleistung des Dampferzeuger so zu steuern, daß die Dampfmenge im Garraum gerade ausreicht. Hierzu ist ein Fühler notwendig, welcher feinfühlig bei Dampfüberschuß reagiert und die Heizung des Dampferzeugers abschaltet, bzw. bei Dampfmangel wieder einschaltet.
Ein Verfahren und eine Vorrichtung zur Regelung einer Wärmebehandlung von Nahrungsmitteln mittels Dampf oder eines Luft/Dampfgemisches in einem Garraum ist in der EP-A-203407 vorgeschlagen. Die Lehre dieser Druckschrift ist es, in der Verbindung zwischen dem Garraum und der Außenluft einen Meßfühler anzuordnen und im Bereich der Auslaßöffnung dieser Verbindung in den Garraum ein Strömungshindernis anzuordnen, um so eine Strömungsstörung herbeizuführen. Das im Garraum befindliche Luft/Dampfgemisch wird durch ein Gebläse so über das Strömungshindernis geführt, daß in der Verbindungsleitung ein Unterdruck entsteht und somit Außenluft am Temperaturfühler vorbeigeführt wird. Ab einem bestimmten im Garraum befindlichen Dampfdruck wird dieser durch Strömung erzeugte Unterdruck überwunden und der Temperaturfühler anstelle von Frischluft mit Dampf beaufschlagt. Durch die Reaktion des Fühlers wird die Heizung abgeschaltet und die Dampfproduktion beendet. Nachdem der Dampfdruck wieder gesunken ist, wird wieder durch den Unterdruck Frischluft am Temperaturfühler vorbeigesaugt, bis dieser soweit abgekühlt ist, daß er die Heizung wieder einschaltet.

Aufgrund dieses Verfahrens ist der Temperatursprung, der von dem Meßfühler erfaßt wird, praktisch immer relativ groß, was zum einen bedeutet, daß der Temperaturfühler nicht besonders empfindlich sein muß, zum anderen aber auch, daß zufällige, kleinere Schwankungen keine Fehlschaltungen auslösen können. Die Anwendung dieser Lehre kann nicht zu einer besonders feinfühligen Steuerung der Dampfleistung führen. Allein vom Abschalten der Heizung durch den direkt mit Dampf beaufschlagten Temperaturfühler bis zum Abkühlen des Dampfes und damit Vermindern des Druckes, so daß wieder kalte Frischluft auf den Fühler treffen kann, wobei zu beachten ist, daß die gesamte Umgebung des Fühlers durch den Dampf und das Kondensat aufgewärmt ist, vergeht zwangsläufig eine erhebliche Zeitspanne, so daß es durchaus passieren kann, daß nicht die für den Garprozeß ausreichende Dampfmenge im Garraum ist.

Außerdem ist diese technische Lösung durch einen hohen Aufwand, so z.B. durch die Notwendigkeit des Einsatzes eines geheizten Ventilators, und durch ein grobes und kompliziertes Reglungsverhalten gekennzeichnet, bei dem der Dampfdruck als die zu regelnde Größe selbst zum Betrieb der Reglung benutzt wird.

Aufgabe der vorliegenden Erfindung ist es, eine Vorrichtung anzugeben, die die Reglung einer Dampfeinrichtung durch einen vereinfachten Aufbau und einen zuverlässigen und feinfühligen Betrieb verbessert.

Zur Lösung dieser Aufgabe werden die im Patentanspruch 1 angegebenen Merkmale vorgeschlagen.

Die beanspruchte zwangsbelüftete Fühleranordnung ermöglicht einerseits eine Beaufschlagung des Temperaturfühler, wenn der Dampfüberschuß ein Maß erreicht hat, welches die Umschaltung notwendig macht, andererseits wird bei Dampfmangel der Temperaturfühler aber wieder schnell abgekühlt.

In der Zeichnung ist die Erfindung an einem Ausführungsbeispiel dargestellt. Es zeigen:

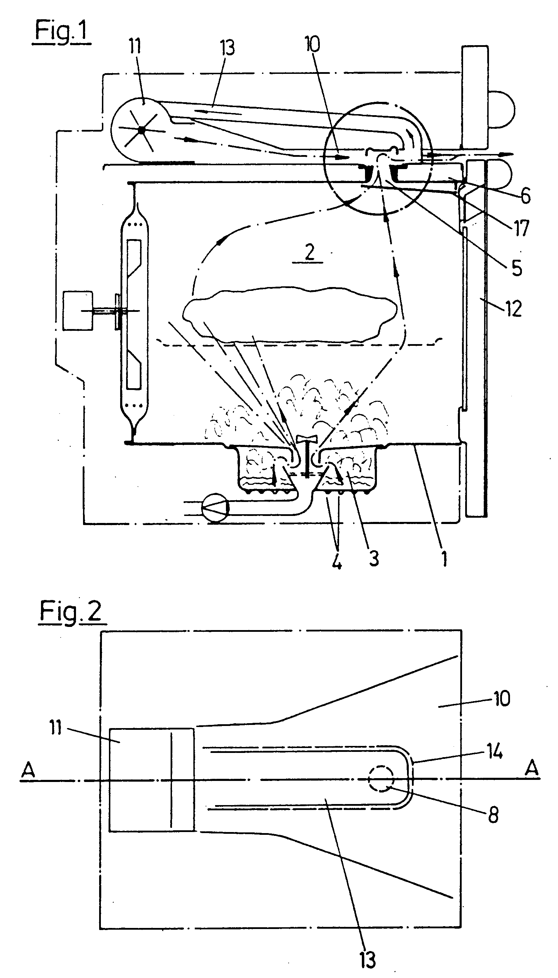

- Fig. 1: den senkrechten Schnitt durch ein Gargerät
- Fig. 2: die Draufsicht auf den Luftkanal des Zwangsluftstromes

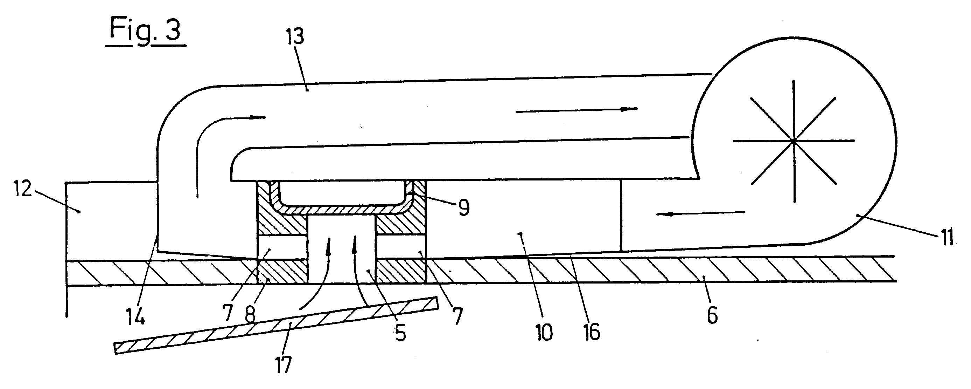

- Fig. 3: einen Schnitt durch den Luftkanal des Zwangsluftstromes und des Temperatur-Fühlers entlang der Linie A-A gemäß Fig. 2.

Im Boden 1 der Garraummuffel 2 ist ein mit Wasser befüllbarer Topf 3 eingelassen, welcher bei Beheizung durch z.B. elektrische Heizelemente 4 Dampf erzeugt. Der Dampf tritt in den Garraum ein, und sobald die gesamte Muffel mit Dampf gefüllt ist, tritt überschüssiger Dampf durch eine Öffnung 5 in der Backofendecke 6 aus. Im Bereich der Auslaßöffnung 5 ist eine mit seitlichen Öffnungen 7 versehene Hülse 8 vorgesehen, welche den Temperaturfühler 9 trägt. Die Öffnungen 7 der Hülse 8 liegen in einem Luftkanal 10, durch welchen ein von dem Gebläse 11 erzeugter Zwangsluftstrom bis zur Vorderseite des Gerätes geführt wird, wo er oberhalb der Tür 12 austritt. Der Zwangsluftstrom beeinflußt auch den aus der Auslaßöffnung 5 zunächst in geringer Menge einströmenden Dampf. Erst bei genügend hohem Dampfüberschuß kann deshalb der Dampf den Temperaturfühler so beeinflussen, daß die Beheizung des Dampferzeugers reduziert oder abgeschaltet wird.

Sobald durch die reduzierte Beheizung des Dampferzeugers die Dampfmenge absinkt, wird der Dampf bald den Temperaturfühler nicht mehr erreichen. Jetzt sorgt der Zwangsluftstrom für eine schnelle zusätzliche Abkühlung der Hülse 8 und des Fühlers 9. Es wird somit eine schnelle Anpassung an die jeweilige Anforderung erreicht.

Um die Kondensation des durch die Auslaßöffnung 5 austretenden Wasserdampfes im Bereich der Hervorderseite zu vermeiden, ist eine Rückführleitung 13 vorgesehen, durch welche der austretende Wasserdampf bis in den Unterdruckbereich des Gebläses 11 geleitet wird und dort mit der übrigen vom Gebläse angesaugten Kühlluft vermischt und mit dieser über den sich zur Gerätevorderseite hin verbreiternden Luftkanal 10 abgeleitet wird.

Kondensat, das sich im Luftkanal 10 bildet, kann durch das allseitige Gefälle des Luftkanals 10 zur Hülse ablaufen und gelangt durch die Auslaßöffnung 5 wieder in die Garraummuffel 2. Das Kondensat-Leitblech 17 führt aufgrund seiner Neigung das Kondensat zur Rückseite der Tür 12 und verhindert so das Abtropfen.

Innerhalb des Luftkanals 10 kann eine U-förmige Leitwand 14 eingesetzt sein, welche evtl. aus den Öffnungen 7 in den Luftkanal 10 gelangenden Dampf zu einem längeren Strömungsweg zwingt und das direkte Austreten zur Herdvorderseite hin verhindert.

## Patentansprüche

1. Vorrichtung zur Steuerung der Dampfleistung eines mit Dampf betriebenen Gargerätes, insbesondere eines mit einem beheizten Dampferzeuger versehenen Backofens, wobei sich in der Backofenwandung eine Auslaßöffnung befindet und im Bereich der Auslaßöffnung ein Temperaturfühler angeordnet ist, **gekennzeichnet durch** eine im Bereich der Auslaßöffnung (5) angeordnete Hülse (8), an deren einem Ende der Temperaturfühler (9) befestigt ist und deren anderes Ende mit der Auslaßöffnung (5) verbunden ist, wobei die Hülse seitliche Öffnungen (7) zwischen den Enden aufweist, und durch einen von einem Gebläse erzeugten Zwangsluftstrom, der durch die Öffnungen (7) an der Auslaßöffnung (5) quer zur Hülsenachse vorbeigeführt wird, und somit den Temperaturfühler (9) abhängig vom Druck des an der Auslaßöffnung (5) anstehenden Dampfes abschirmt.

2. Vorrichtung nach Anspruch 1,
dadurch gekennzeichnet, daß die gelochte Hülse (8) einen sich zur Luftaustrittsseite des Zwangsluftstromes hin verbreiternden und an der Gerätevorderseite endenden Luftkanal (10) durchsetzt.

3. Vorrichtung nach Anspruch 1 und/oder 2,
dadurch gekennzeichnet, daß die Hülse (8) in eine zur Saugseite des Gebläses (11) führenden Rückleitung (13) mündet.

4. Vorrichtung nach einem der Ansprüche 1 bis 3,
dadurch gekennzeichnet, daß der Luftkanal (10) mit einer die Hülse (8) zur Luftaustrittsseite hin abschirmenden U-förmigen Leitwand (14) versehen ist, die das Luft-Dampf-Gemisch in die Rückleitung (13) umlenkt.

5. Vorrichtung nach einem der Ansprüche 1 bis 4,
dadurch gekennzeichnet, das der Luftkanal (10) allseits Gefälle zur Hülse (8) bzw. zur Auslaßöffnung (5) aufweist.

6. Vorrichtung nach Anspruch 5,
dadurch gekennzeichnet, daß sich unterhalb der Auslaßöffnung (5) in der Garraummuffel (2) ein zur Tür (12) geneigtes Kondensat-Leitblech (17) befindet.

## Claims

1. Device for controlling the steam output of a steam-operated cooking appliance, in particular an oven provided with a heated steam generator, wherein an outlet opening is located in the oven wall and a temperature sensor is disposed in the vicinity of the outlet opening, characterised by a sleeve (8) which is disposed in the vicinity of the outlet opening (5), at one end of which the temperature sensor (9) is secured, and of which the other end is connected to the outlet opening (5), wherein the sleeve comprises lateral openings (7) between the ends; and by a forced air stream which is generated by a blower and is passed through the openings (7) past the outlet opening (5) transversely to the sleeve axis, and thus protects the temperature sensor (9) in accordance with the pressure of the steam at the outlet opening (5).

2. Device according to claim 1, characterised in that the perforated sleeve (8) passes through an air duct (10) which widens towards the air outlet side of the forced air stream and terminates at the front of the appliance.

3. Device according to Claim 1 and/or 2. characterised in that the sleeve (8) opens into a return line (13) leading to the intake side of the blower (11).

4. Device according to any one of Claims 1 to 3, characterized in that the air duct (10) is provided with a U-shaped guide wall (14) which protects the sleeve (8) towards the air inlet side and deflects the air-steam mixture into the return line (13).

5. Device according to any one of Claims 1 to 4, characterised in that the air duct (10) is inclined on all sides towards the sleeve (8) and/or towards the outlet opening (5).

6. Device according to Claim 5, characterised in that there is a condensation guide plate (17), inclined towards the door (12), below the outlet opening (5) in the cooking chamber muffle (2).

## Revendications

1. Dispositif de commande de l'apport de vapeur d'un appareil de fermentation fonctionnant à la vapeur, en particulier d'un four de cuisson pourvu d'un générateur de vapeur chauffé, une ouverture d'échappement se trouvant dans la paroi du four de cuisson et une sonde de température étant disposée dans la zone de l'ouverture d'échappement, caractérisé par une douille (8), disposée dans la zone de l'ouverture d'échappement (5), à une extrémité de laquelle la sonde de température (9) est fixée et dont l'autre extrémité est reliée à l'ouverture d'échappement (5), la douille présentant des ouvertures latérales (7) entre les extrémités, et caractérisé par un courant d'air forcé produit par une soufflante, passant à travers une ouvertures (7) ménagées sur l'ouverture d'échappement (5), transversalement à l'axe de douille, et produisant ainsi une isolation de la sonde de température (9), en fonction de la pression de la vapeur appliquée à l'ouverture d'échappement (5).

2. Dispositif selon la revendication 1, caractérisé en ce que la douille percée (8) traverse un canal d'air (10), s'élargissant en allant vers le côté de la sortie de l'air du courant d'air forcé et finissant en face avant de l'appareil.

3. Dispositif selon la revendication 1 et/ou 2, caractérisé en ce que la douille (8) aboutit à une conduite de retour (13) menant au côté d'aspiration de la soufflante (11).

4. Dispositif selon l'une des revendications 1 à 3, caractérisé en ce que le canal d'air (10) est pourvu d'une paroi déflectrice en U (14), isolant la douille (8) par rapport au côté de sortie de l'air et déviant le mélange air-vapeur dans la conduite de retour (13).

5. Dispositif selon l'une des revendications 1 à 4, caractérisé en ce que le canal d'air (10) présente de tous côtés une pente descendant en direction de la douille (8) et de l'ouverture d'échappement (5).

6. Dispositif selon la revendication 5, caractérisé en ce qu'une tôle déflectrice de condensat (17), inclinée en descendant en direction de la porte (12), se trouve audessous de l'ouverture d'échappement (5), dans le moufle (2) de l'enceinte de fermentation.
